# EUROPEAN PATENT APPLICATION

(11) **EP 2 280 521 A1**
(43) Date of publication of application: **02.02.2011**
(21) Application number: 09166891.3
(22) Date of filing: 30.07.2009
(51) Int. Cl.: H04L 29/06

(54) **Method of switching media content for a mobile apparatus**

(71) Applicant: Alcatel Lucent, 75008 Paris (FR)
(72) Inventor: Jaouen, Laurent, 35690, Acigne (FR); Phan, Cao-Thanh, 35520, La Meziere (FR)
(74) Representative: Camus, Olivier Jean-Claude

(57) **Abstract**

The present invention relates to a method of switching media content for a mobile apparatus comprising a player and a selector. It is characterized in that it comprises the steps of:
- receiving an http streaming request from said player for playing a first media content on said player (RX_REQ1 (C1));
- sending to said player first http messages related to said http streaming request comprising first files corresponding to said first media content, said first media content being segmented within some of said first files (TX_MSG1 (C1.F1;C1.F2));
- receiving an http switching media content request from said selector for playing a second media content on said player (RX_REQ2 (C2));
- replacing within said first http messages said first files by second files corresponding to said second media content (RPL_C); and
- sending to said player first http messages related to said http streaming request comprising said second files, said second media content being segmented within some of said second files (TX_MG1 (C2.F1;C2.F2)).

## Description

### FIELD OF THE INVENTION

The present invention relates to a method of switching media content for a mobile apparatus comprising a media content player and a media content selector. The invention also relates to a method of requesting a switching media content for a mobile apparatus, to an http server and to a mobile apparatus.

Such method of switching media content may be used in any media communication system using media content such as, but not exclusively, audio/video channel.

### BACKGROUND OF THE INVENTION

A method of switching media content for a mobile apparatus comprising a media content player and a media content selector, well-known by the man skilled in the art, comprises the steps of:
- stopping the media content player which plays a media content by closing the window in which one currently watch the media content;
- choosing the media content in a list of available media contents; and
- restarting said media content player within the new media content chosen.

One problem of this known prior art is that the media content stream is interrupted, and the stop/chose/restart steps are time consuming.

### SUMMARY OF THE INVENTION

It is an object of the invention to provide a method of switching media content for a mobile apparatus comprising a media content player and a media content selector, which decrease the time for switching the media content without interrupting the media content stream.

To this end, there is provided a method of switching media content for a mobile apparatus comprising a media content player and a media content selector, said method comprising the steps of:
- receiving an http streaming request from said media content player for playing a first media content on said media content player;
- sending to said media content player first http messages related to said http streaming request comprising first files corresponding to said first media content, said first media content being segmented within some of said first files ;
- receiving an http switching media content request from said media content selector for playing a second media content on said media content player;
- replacing within said first http messages said first files by second files corresponding to said second media content; and
- sending to said media content player first http messages related to said http streaming request comprising said second files, said second media content being segmented within some of said second files.

As we will see in further details, thanks to the replacing of the files corresponding to a first chosen media content by the files corresponding to a second chosen media content within the same http message related to an http streaming of the first media content, the switching of media content is performed without interrupting the media content stream.

In a first not limited embodiment, the media content is an audio/video channel. This method permits a user of a mobile apparatus to switch audio/video channel, in a simple way, such as a TV channel.

In a second not limited embodiment, the method comprises a further step of checking authentication and authorization of the mobile apparatus to have access to a media content. It permits to check if a user of a mobile apparatus may have access to the files corresponding to a media content.

In a third not limited embodiment, the method comprises a further step of saving context information on an http streaming request of a mobile apparatus regarding a media content. It permits to perform some statistics related to the use of a media content subscription by a user of a mobile apparatus.

In a fourth not limited embodiment, the method comprises a further step of sending to an event management system an event for notifying the end of the playing of the first media content and the beginning of the playing of the second media content. It permits to acquire measuring audience data for example.

In a fifth not limited embodiment, the method comprises a further step of inserting an advertisement content within said second files. It permits a media content operator to insert some advertisement.

In addition, there is provided a method of requesting a switching media content for a mobile apparatus comprising a media content player and a media content selector, said method comprising the steps of :
- sending to said http server by means of said media content player an http streaming request for playing a first media content on said media content player;
- receiving from said http server on said media content player first http messages related to said http streaming request comprising first files corresponding to said first media content, said first media content being segmented within some of said first files ;
- sending to said http server by means of said media content selector an http switching media content request for playing a second media content on said media content player; and
- receiving from said http server on said media content player first http messages related to said http streaming request comprising second files, said second media content being segmented within some of said second files.

In addition, there is provided an http server able to switch media content and able to communicate with a mobile apparatus comprising a media content player and a media content selector, wherein it is able to:
- receive an http streaming request from said media content player for playing a first media content on said media content player;
- send to said media content player first http messages related to said http streaming request comprising first files corresponding to said first media content, said first media content being segmented within some of said first files ;
- receive an http switching media content request from said media content selector for playing a second media content on said media content player;
- replace within said first http messages said first files by second files corresponding to said second media content; and
- send to said media content player first http messages related to said http streaming request comprising said second files, said second media content being segmented within some of said second files.

In addition, there is provided a mobile apparatus comprising a media content player and a media content selector and able to communicate with an http server, wherein it is able to:
- send to said http server by means of said media content player an http streaming request for playing a first media content on said media content player;
- receive from said http server on said media content player first http messages related to said http streaming request comprising first files corresponding to said first media content, said first media content being segmented within some of said first files ;
- send to said http server by means of said media content selector an http switching media content request for playing a second media content on said media content player; and
- receive from said http server on said media content player first http messages related to said http streaming request comprising second files, said second media content being segmented within some of said second files.

In a first not limited embodiment, the mobile apparatus is a mobile phone.

In a second not limited embodiment, the mobile apparatus is an IPhone^{™}. It permits to perform switching of media content on said specific mobile phone.

In addition, there is provided a media communication system, wherein it comprises an http server as characterized above and a mobile apparatus as characterized above.

In addition, there is provided a computer program product for a computer, comprising a set of instructions, which when loaded into said computer, causes the computer to carry out the method of switching media content as characterized above.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates schematically a media communication system in a first not limited embodiment comprising an http server and a mobile apparatus according to the invention;
- Fig.2 illustrates a schematic diagram showing a method of switching media content in a not limited embodiment according to the invention;
- Fig.3 illustrates a schematic diagram showing a method of requesting a switching media content in a not limited embodiment according to the invention;
- Fig.4 illustrates a schematic diagram showing the method of switching media content of Fig. 2 with further steps according to not limited embodiments ;
- Fig.5 illustrates a schematic diagram showing the method of switching media content of Fig. 2 combined with the method of requesting a switching media content of Fig. 3 according to a not limited embodiment ;
- Fig.6 illustrates schematically data exchange between an http server and a mobile apparatus of the media communication system of Fig.1 which are able to perform the method of switching content and the method of requesting switching content of Fig.5;
- Fig.7 illustrates schematically a diagram of the media communication system of Fig. 1, which is able to perform the method of Fig.5; and
- Fig.8 Fig.1 illustrates schematically a media communication system in a second not limited embodiment comprising an http server and a mobile apparatus according to the invention.

### DESCRIPTION OF EMBODIMENTS OF THE INVENTION

In the following description, well-known functions or constructions by the man skilled in the art are not described in detail since they would obscure the invention in unnecessary detail.

The present invention relates to a method of switching media content for a mobile apparatus comprising a media content player and a media content selector, and to a method of requesting a switching media content.

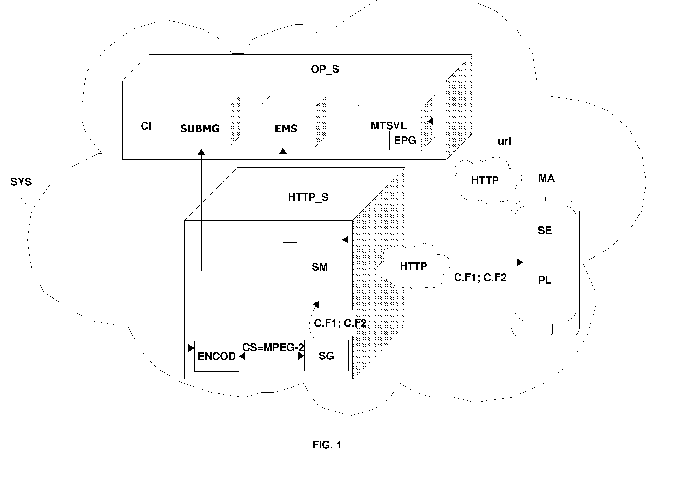

As illustrated in Fig.1, a media communication system SYS able to manage:
- an http server HTTP_S comprising an encoder ENCOD, a segmenter SG, and a session manager SM ;
- a mobile apparatus MA comprising a media content player PL and a media content selector SE ;
- an event management system EMS ;
- a subscription management system SUBMG ;
- a mobile media content service logic MTVSL. , is taken as a not limited example.

In a not limited embodiment, the mobile apparatus MA described are mobile phones. In a not limited variant of said embodiment, the mobile apparatus MA is an IPhone^{™}.

In a not limited embodiment, a media content C is an audio/video (A/V) channel. In other not limited embodiments, a media content is a single A/V content such as a musical clip, or a playlist of A/V contents or an audio channel.

In the description below, a switching of A/V channel is taken into a not limited example. In this example, the mobile media content service logic MTVSL is a mobile TV service logic.

When a user of the mobile apparatus MA wants to switch media content C, the requesting switching media content is performed by the mobile apparatus MA and the associated switching media content is performed by the http server HTTP_S.

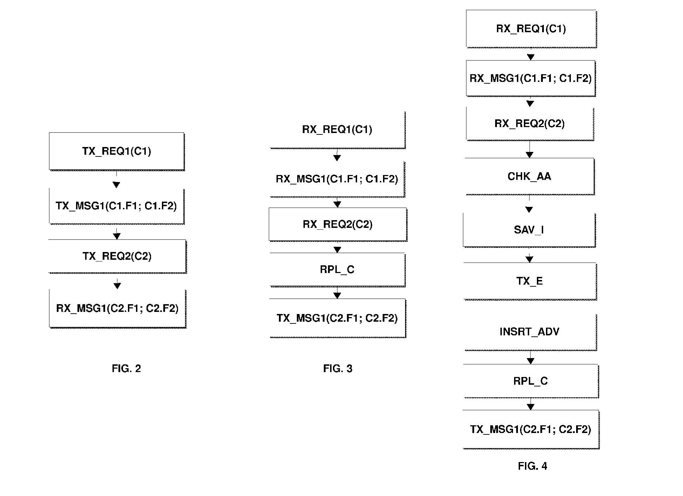

The method of requesting a switching media content is illustrated in Fig. 2 and the method of switching media content is illustrated in Fig. 3.

The method of requesting a switching media content comprises the following steps as illustrated in Fig. 2:
- sending to said http server HTTP_S by means of said media content player PL an http streaming request REQ1 for playing a first media content C1 on said media content player PL (step TX_REQ1);
- receiving from said http server HTTP_S on said media content player PL first http messages MSG1 related to said http streaming request REQ1 comprising first files C1.F1 ; C1.F2 corresponding to said first media content C1, said first media content C1 being segmented within some of said first files C1.F2 (step RX_MSG1 (C1.F1; C1.F2));
- sending to said http server HTTP_S by means of said media content selector SE an http switching media content request REQ2 for playing a second media content C2 on said media content player PL (step TX_REQ2(C2));
- receiving from said http server HTTP_S on said media content player PL first http messages MSG1 related to said http streaming request REQ1 comprising second files C2.F1 ; C2.F2, said second media content C2 being segmented within some of said second files C2.F2 (step RX_MSG1 (C2.F1; C2.F2)).

The method of switching media content comprises the following steps as illustrated in Fig. 3:
- receiving an http streaming request REQ1 from said media content player PL for playing a first media content C1 on said media content player PL (step RX_REQ1 (C1));
- sending to said media content player PL first http messages MSG1 related to said http streaming request REQ1 comprising first files C1.F1 ; C1.F2 corresponding to said first media content C1, said first media content C1 being segmented within some of said first files (step TX_MSG1 (C1.F1; C1.F2));
- receiving an http switching media content request REQ2 from said media content selector SE for playing a second media content C2 on said media content player PL (step RX_REQ2(C2));
- replacing within said first http messages MSG1 said first files C1.F1 ; C1.F2 by second files C2.F1 ; C2.F2 corresponding to said second media content C2 (step RLP_C); and
- sending to said media content player PL first http messages MSG1 related to said http streaming request REQ1 comprising said second files C2.F1 ; C2.F2, said second media content C2 being segmented within some of said second files C2.F2 (step TX_MSG1 (C2.F1; C2.F2)).

In a not limited embodiment as illustrated in Fig. 4, the method of switching media content comprises a further step of checking authentication and authorization of the mobile apparatus MA to have access to a media content C1, C2 (step CHK_AA).

In a not limited embodiment as illustrated in Fig. 4, the method of switching media content comprises a further step of saving information I on an http streaming request of a mobile apparatus MA regarding a media content C (step SAV_I).

In a not limited embodiment as illustrated in Fig. 4, the method of switching media content comprises a further step of sending to an event management system EMS an event E for notifying the end of the playing of the first media content C1 and the beginning of the playing of the second media content C2 (step TX_E).

In a not limited embodiment as illustrated in Fig. 4, the method of switching media content comprises a further step of inserting an advertisement content within said second files C2.F1; C2.F2 (step INSRT_ADV).

The method of switching media content and the method of requesting a switching media content are described in details below.

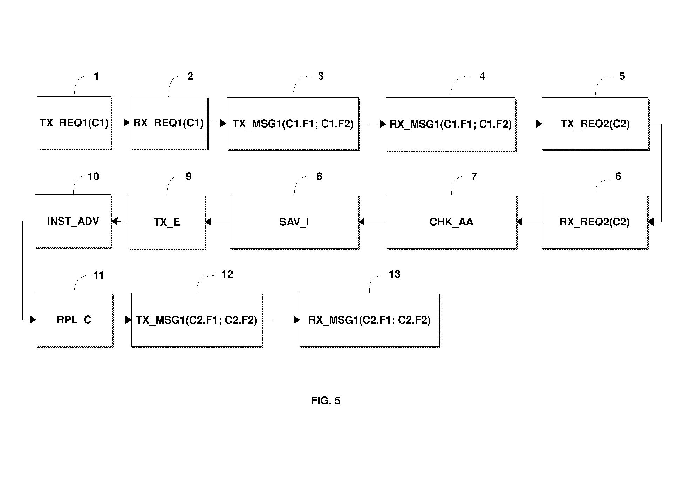

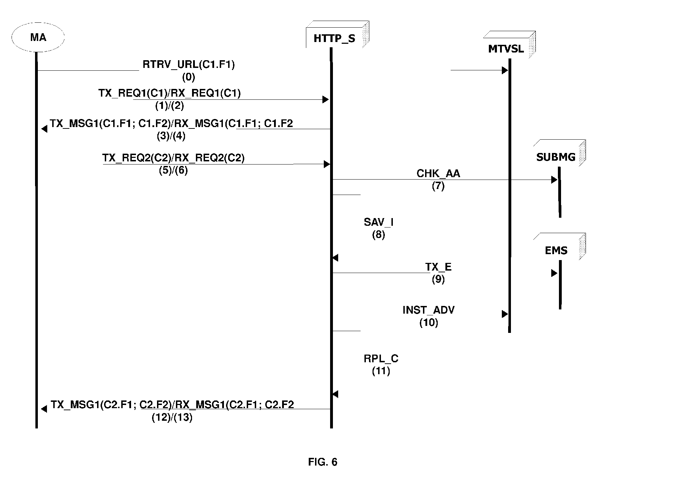

In the following description, in the not limited embodiment of the switching media content described, the method of switching media content comprises the further steps above-mentioned. Reference to Fig. 5 and Fig. 6 will be made.

When a user of the mobile apparatus MA wants to watch a media content C, he selects by means of the media content selector SE a first media content C1 he wants to be played on the media player PL. The following steps are thus performed.

**In an initial step 0)**, an operator server OP_S to which the mobile apparatus MA has subscribed, sends to the media content selector SE via an http request an url of a file C1.F1 called index file corresponding to the first media content C1 (step RTRV_URL(C1.F1) illustrated in Fig.6). The media content selector SE transmits said url to the media content player PL.

**In a first step 1)**, one sends to said http server HTTP_S by means of said media content player PL an http streaming request REQ1 for playing the first media content C1 on said media content player PL (step TX_REQ1).

It is to be noted that the http streaming request REQ1 comprises the url of the index file C1.F1 (the m3u8 index file which is described hereinafter).

The streaming request REQ1 is an http request using the well-known protocol HTTP "Hypertext Transfer Protocol".

In another not limited variant, the streaming request REQ1 is an https request using the well-known protocol HTTPS "Hypertext Transfer Protocol Secure".

**In a second step 2)**, one receives an http streaming request REQ1 from said media content player PL for playing a first media content C1 on said media content player PL (step RX_REQ1 (C1)).

In a not limited embodiment, this step is performed by the session manager SM of the http server HTTP_S.

It is to be noted that the http streaming request REQ1 comprises the name of the media content C1 to be watched, here the name of the first channel C1.

**In a third step 3)**, one sends to said media content player PL first http messages MSG1 related to said http streaming request REQ1 comprising first files C1.F1 ; C1.F2 corresponding to said first media content C1, said first media content C1 being segmented within some of said first files (step TX_MSG1 (C1.F1; C1.F2)).

In a not limited embodiment, this step is performed by the session manager SM of the http server HTTP_S.

As will be described below, the first files C1.F1 and C1.F2 corresponding to the first media content C1 comprise:
- index file C1.F1 comprising a list of segments C1.F2, and
- the segments C1.F2, the first media content being segmented within said segments.

This step comprises the sub-step of retrieving the first files C1.F1 and C1.F2 from the segmenter SG by means of the session manager SM.

It is to be noted that the segmenter SG is able to:
- segment an encoded stream CS corresponding to a media content C into a series of short media files C.F2, called segments ;
- create and maintain an index file C.F1 comprising a list of the media files C.F2.

In a not limited embodiment, in the case of the A/V channel, the url of the index file C.F1 is published on the mobile TV service logic MTVSL comprising an electronic program guide EPG, as illustrated in Fig. 1.

It is also to be noted that the encoded stream CS are based on media continuous stream CI corresponding to the media content C which is encoded by the encoder ENCOD.

In a not limited embodiment, the encoder ENCOD is an MPEG-2 encoder and the media encoded stream CS may have the following formats:
- H.264 video and/or
- MP3 audio or
- HE_AAC or AAC-LC stereo audio.

Thus, in a not limited embodiment, the media files C.F2 are saved as -TS files (MPEG-2 segments) and the index file C.F1 is saved as .m3U8 file, which is an extension of the .m3U format used for MP3 playlists.

Hence, in a not limited example of a C.m3U8 file comprising three C.MPEG2-TS segments of 10 seconds media duration each, it has the following structure for a live media content such as a live channel.
#EXTM3U
#EXT-X-TARGETDURATION: 10
#EXT-X-MEDIA-SEQUENCE: 1
#EXTINF: 10.
URI = http://name server/segment1-TS
#EXTINF: 10.
URI = http://name server/segment2-TS
#EXTINF: 10.
URI = http://name server/segment3-TS

Hence, in another not limited example of a C.m3U8 file comprising three C.MPEG2-TS segments of 10 seconds media duration each, it has the following structure for a media content which is not live such as a live video on demand "VOD".
#EXTM3U
#EXT-X - TARGETDURATION: 10
#EXTINF : 10.
URI = http://name server/segment1-TS
#EXTINF : 10.
URI = http://name server/segment2-TS
#EXTINF : 10.
URI = http://name server/segment3-TS
#EXT-X-ENDLIST

Such formats and structures are described in the draft "HTTP live Streaming, R.Pantos Apple, June 8, 2009" edited by the IETF organization.

It is to be noted that in the not limited example given, the URI (Uniform Resource Identifier) where the segments -TS may be found is the http server HTTP_S.

In a not limited embodiment, the media continuous stream CI are live or are from prerecorded source and they are proposed by the operator server OP_S.

In the case of a live media continuous stream CI, the segmenter SG generates -TS segments and m3u8 files referencing the -TS segments continuously.

**In a fourth step 4)**, one receives from said http server HTTP_S on said media content player PL first http messages MSG1 related to said http streaming request REQ1 comprising first files C1.F1 ; C1.F2 corresponding to said first media content C1, said first media content C1 being segmented within some of said first files (step RX_MSG1 (C1.F1 ; C1.F2)).

This step comprises the following sub-steps:
- the media content player PL receives a first http message MSG1 with the m3u8 index file corresponding to the first channel C1;
- upon receiving the m3u8 index file, the mobile apparatus MA sends to the http server HTTP_S an http message comprising the URI of a segment (URI found in the m3u8 index file as described before) and receives the corresponding segment.

Thus, all the segments are received and may be played by the media content player PL.
Hence, the user of the mobile apparatus MA may watch by means of the media content player the media content C1, here the first A/V channel he has chosen.

It is to be noted that in case of a live channel, as defined in HTTP live Streaming Apple specifications, the media content player PL is responsible for reloading C.m3u8 index file as soon as this one has been parsed up to antepenultimate C.MPEG2-TS segment. It means that, in the frame of a C.m3u8 file referencing 3 C.MPEG2-TS segments, the media content player PL downloads alternatively new release of C.m3u8 file and first C.MPEG2-TS segment referenced into C.m3u8 file. Thus, the second C.MPEG2-TS segment and the third C.MPEG2-TS segment of the first C.m3u8 file are referenced as the first C.MPEG2-TS segment and as the second C.MPEG2-TS segment in the new release of C.m3u8 respectively and the third segment C.MPEG2-TS in the new release C.m3u8 is a new segment of the live channel.

While watching the first A/V channel C1, when the user wants to switch channel, he chooses a new A/V channel C2 by means of the media content selector SE.

It is to be noted that the media content selector SE thus comprises display means in order for the user to perform the selection. The display means permits to display the list of the available channels C, in a not limited embodiment, over the media content player PL of the mobile apparatus MA in rear projection without interrupting the media content player PL.

In a not limited embodiment, in the example of the IPhone SDK^{™}, the display means are based on a function called overlay. In a not limited example, the display means are a popup window.

Hence, the further following steps are performed.

**In a fifth step 5)**, upon selection of the new channel C2 by the user, one sends to said http server HTTP_S by means of said media content selector SE an http switching media content request REQ2 for playing a second media content C2 on said media content player PL (step TX_REQ2(C2)).

It is to be noted that the http switching media content request REQ2 comprises the name of the media content C2 to be watched, here the name of the second channel C2.

It is to be noted that similarly to the initial step 0) described before, the operator server OP_S to which the mobile apparatus MA has subscribed, has previously sent (upon the selection of the new channel C2) to the media content selector SE via an http request an url of the index file C2.F1 corresponding to the second media content C2 (step not illustrated).

In a first not limited embodiment, the http switching media content request REQ2 is sent directly to the http server HTTP_S.

In a second not limited embodiment, the http switching media content request REQ2 is sent indirectly to the http server HTTP_S via a third server. In a not limited example, this third server is an operator server OP_S. It permits to insert extra multimedia content such as commercials or alerts to a media content. Then, the third sever conveys the http switching media content request REQ2 to the http server HTTP_S.

**In a sixth step 6)**, one receives said http switching media content request REQ2 from said media content selector SE for playing a second media content C2 on said media content player PL (step RX_REQ2(C2)).

In a not limited embodiment, this step is performed by the session manager SM of the http server HTTP_S.

**In a seventh step 7)**, one checks authentication and authorization (called AA checking) of the mobile apparatus MA to have access to a media content C1, C2 (step CHK_AA).

In a not limited embodiment, based on a mobile apparatus MA identifier (MSISDN, IMIS, ...), the segmenter SG controls the mobile apparatus access request to a media content C, and potentially rejects said request by invoking external subscriptions' manager SUBMG. Said subscriptions' manager SUBMG is provided by the operator who provides the media contents, and is thus comprised within the operator server OP_S.

In a not limited embodiments, the AA checking is performed on the http message MSG1 comprising the url of the m3u8 index file or on the http messages MSG1 comprising the URI of the different segments -TS corresponding to the media content C chosen.

In not limited variant, the url of the m3u8 index file comprises the mobile apparatus MA identifier which is further used by the AA checking. In another not limited variant, the header of the http switching request REQ2 comprises the mobile apparatus MA identifier which is further used by the AA checking.

As the authentication and authorization functions are well-known by the man skills in the art, they are not described here.

Hence this step permits to check that the user of a mobile apparatus MA (declared in a mobile TV solution on the mobile TV service logic MTSVL) has subscribed to a package containing channels to be watched.

If access to the media content is not granted, the media content request is rejected or redirect to a guest media content, such as advertising.

**In an eight step 8)**, one saves information I on an http streaming request of a mobile apparatus MA regarding a media content C (step SAV_I).

This permits to save context information I on an http streaming request REQ1 regarding a particular mobile apparatus, i.e. user. This context comprises authentication information, subscription information and timestamps information such as in not limited examples:
- timestamp for beginning of streaming session, a streaming session beginning with :
   - an http streaming request REQ1 or a switching request
   - and ending with the end of a streaming session (end of the download of the last segment of the media content) or with the beginning of a switching request;
- timestamp for beginning of streaming on last requested media content C;
- name of last requested media content C;
- mobile apparatus IP address;
- subscribed channels bundle;
- subscription duration.

This step permits to generate statistical data regarding a user and allows monitoring the audience and user interest for a channel for example.

In a not limited example, this step is performed by the session manager SM.

**In a ninth step 9)**, one sends to an event management system EMS an event E for notifying the end of the playing of the first media content C1 and the beginning of the playing of the second media content C2 (step TX_E).

Thus, one knows if an event has occurred such as the change of the media content stream, the stopping of the media content player etc.

This step permits to perform measuring audience data regarding a channel for example.

In a not limited embodiment, said event management system EMS is provided by the operator who provides the media contents, and is thus comprised within the operator server OP_S.

**In a tenth step 10)**, one inserts an advertisement content within said second files C2.F1; C2.F2 (step INSRT_ADV).

In a not limited embodiment, this step is performed by the mobile TV service logic MTVSL, which is comprised within the operator server OP_S.

In a not limited embodiment, the advertisement content is inserted as -TS files in the m3u8 index file.

In a not limited embodiment an alert content may also be inserted within said second files -TS.

As described before, when this step is performed, the switching media content request REQ2 is sent to the operator server OP_S which then conveys it to the http server HTTP_S.

**In an eleventh step 11)**, one replaces within said first http messages MSG1 said first files C1.F1 ; C1.F2 by second files C2.F1 ; C2.F2 corresponding to said second media content C2 (step RLP_C).
In a not limited embodiment, the session manager of the http server HTTP_S performed this step by firstly retrieving from the segmenter SG the segments -TS and index file m3u8 corresponding to the second channel C2 and secondly replacing the first files by these second files.

**In a twelfth step 12)**, one sends to said media content player PL first http messages MSG1 related to said http streaming request REQ1 comprising said second files C2.F1 ; C2.F2, said second media content C2 being segmented within some of said second files C2.F2 (step TX_MSG1 (C2.F1; C2. F2)).
In a not limited embodiment, this step is performed by the session manager of the http server HTTP_S.

**In a thirteenth step 13)**, one receives from said http server HTTP_S on said media content player PL first http messages MSG1 related to said http streaming request REQ1 comprising second files C2.F1 ; C2.F2, said second media content C2 being segmented within some of said second files C2.F2 (step RX_MSG1 (C2.F1; C2.F2)).

It is to be noted that the change of files C1.F1; C1.F2 to C2.F1 and C2.F2 is transparent from the mobile apparatus MA point of view. Indeed, the mobile apparatus MA still receives the first http messages MSG1 and thus still considers playing the first media content C1. As the same http message is used, the mobile apparatus is unaware of the switching.

Moreover, there is no interruption of a media content stream.

It is to be understood that the order of the steps above described has been mentioned and illustrated in not limited embodiments. Of course, any other orders of the steps, when applicable, may be carried out. For example, the step 7) 8) and 9) illustrated in Fig. 5 and Fig. 6 may be carried out in parallel.

Hence, based on an out of band signaling (i.e. a media content switching is requested and performed outside the media content player), the session manager SM processes media content switching requests by dynamically modifying content of the m3u8 index file, downloaded by a given mobile apparatus MA, and if so, according to an expected extra media content to be inserted, such as an advertisement.

Hence, the method of switching media content and the method of requesting a switching media content improve the switching media content time and avoid turning off of the media content player PL.

As described above, the method of switching media content and the method of requesting a switching media content described are carried out respectively by:
- An http server HTTP_S able to switch media content C and able to communicate with a mobile apparatus MA comprising a media content player PL and a media content selector SE; and
- A mobile apparatus MA comprising a media content player PL and a media content selector SE and able to communicate with an http server HTTP_S.

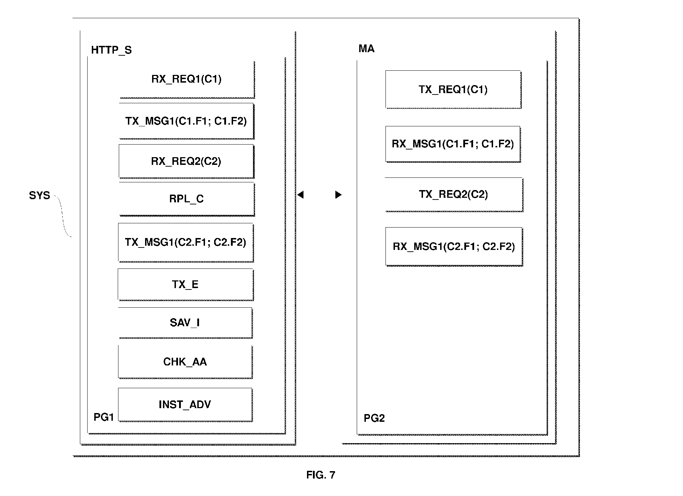

As illustrated on Fig. 7, such an http server HTTP_S is able to:
- receive an http streaming request REQ1 from said media content player PL for playing a first media content C1 on said media content player PL ;
- send to said media content player PL first http messages MSG1 related to said http streaming request REQ1 comprising first files C1.F1 ; C1.F2 corresponding to said first media content C1, said first media content C1 being segmented within some of said first files ;
- receive an http switching media content request REQ2 from said media content selector SE for playing a second media content C2 on said media content player PL ;
- replace within said first http messages MSG1 said first files C1.F1
   ; C1.F2 by second files C2.F1 ; C2.F2 corresponding to said second media content C2 ; and
- send to said media content player PL first http messages MSG1 related to said http streaming request REQ1 comprising said second files C2.F1 ; C2.F2, said second media content C2 being segmented within some of said second files C2.F2.

As illustrated on Fig. 7, such a mobile apparatus MA is able to:
- send to said http server HTTP_S by means of said media content player PL an http streaming request REQ1 for playing a first media content C1 on said media content player PL ;
- receive from said http server HTTP_S on said media content player PL first http messages MSG1 related to said http streaming request REQ1 comprising first files C1.F1 ; C1.F2 corresponding to said first media content C1, said first media content C1 being segmented within some of said first files ;
- send to said http server HTTP_S by means of said media content selector SE an http switching media content request REQ2 for playing a second media content C2 on said media content player PL ; and
- receive from said http server HTTP_S on said media content player PL first http messages MSG1 related to said http streaming request REQ1 comprising second files C2.F1 ; C2.F2, said second media content C2 being segmented within some of said second files C2.F2.

In a not limited embodiment, the mobile apparatus MA is a mobile phone.

In a not limited embodiment, the mobile apparatus MA is an IPhone^{™}. Therefore, these two methods may be implemented within the proposed standard "HTTP Live Streaming" of Apple^{™}.

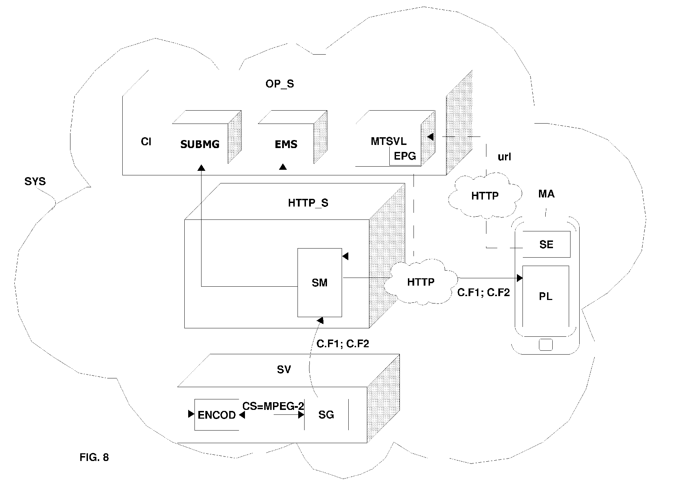

It is to be understood that the present invention is not limited to the aforementioned embodiments and variations and modifications may be made without departing from the spirit and scope of the invention. In the respect, the following remarks are made.
- Instead of a mobile phone, the mobile apparatus MA may only comprises the media content player function. For example, it may be an IPod^{™}.
- The architecture of the media communication system SYS may be different from the not limited example illustrated in Fig. 1. Hence, it may comprise an independent server SV which comprises the encoder ENCOD and the segmenter SG, as illustrated in Fig. 8 according to a second embodiment of the media communication system SYS.

It is to be understood that the present invention is not limited to the aforementioned application.

It is to be understood that the methods and the elements according to the invention are not limited to any implementation.

There are numerous ways of implementing functions of the methods of switching media content and of requesting switching media content by means of items of hardware or software, or both, provided that a single item of hardware or software can carry out several functions. It does not exclude that an assembly of items of hardware or software or both carry out a function. For example, the saving context information step 8) may be combined with the transmitting event step 9), thus forming a single function without modifying the methods of switching media content and of requesting switching media content methods.

Said hardware or software items can be implemented in several manners, such as by means of wired electronic circuits or by means of a computer program product that is suitable programmed respectively.

A first computer program product PG1 can be contained in a computer or in an http server, and more particularly in the session manager. Said http server comprises a unit control able to carry out the steps described before, said unit control being hardware or software items as above stated.

A second computer program product PG2 can be contained in a computer or in a mobile apparatus, and more particularly in the media content selector. Said mobile apparatus comprises a unit control able to carry out the steps described before, said unit control being hardware or software items as above stated.

The first computer program product PG1 comprises a set of instructions. Thus, said set of instructions contained, for example, in a computer programming memory or in an http server memory, may cause the computer or the http server to carry out the different steps of the method of switching media content.

The second computer program product PG2 comprises a set of instructions. Thus, said set of instructions contained, for example, in a computer programming memory or in a mobile apparatus memory, may cause the computer or the http server to carry out the different steps of the method of requesting a switching media content.

The set of instructions may be loaded into the programming memory by reading a data carrier such as, for example, a disk. A service provider can also make the set of instructions available via a communication network such as, for example, the Internet.

Hence, the invention comprises the further following advantages:
- it may be applied on any mobile apparatus which doesn't use an RSTP transport bearer, such as the Iphone^{™} or IPhone SDK^{™}: it permits to switch media content on a mobile apparatus which does not allows RTSP streaming;
- it may be applied on any mobile apparatus which doesn't propose any solution to switch media content, such as the Iphone^{™}
- the transport bearer (http session between the session manager and the media content selector) is unchanged;
- it avoids a user of the mobile apparatus to turn off the media content player;
- it permits to send a media content stream in segments thanks to http streaming;
- it avoids hacking attempts on a user media content subscription;
- it ensures unique access for a given media content by the user who has subscribed to it by AA checking;
- it permits to store end-user's information such as time spent to watch a media content; and
- it avoids restarting another http streaming connection (sending an http

streaming request, downloading of the index file and segments, playing said segments) when a user wants to switch media content.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. A method of switching media content (C) for a mobile apparatus (MA) comprising a media content player (PL) and a media content selector (SE), wherein it comprises the steps of :
- receiving an http streaming request (REQ1) from said media content player (PL) for playing a first media content (C1) on said media content player (PL) ;
- sending to said media content player (PL) first http messages (MSG1) related to said http streaming request (REQ1) comprising first files (C1.F1 ; C1.F2) corresponding to said first media content (C1), said first media content (C1) being segmented within some of said first files ;
- receiving an http switching media content request (REQ2) from said media content selector (SE) for playing a second media content (C2) on said media content player (PL) ;
- replacing within said first http messages (MSG1) said first files (C1.F1 ; C1.F2) by second files (C2.F1 ; C2.F2) corresponding to said second media content (C2) ; and
- sending to said media content player (PL) first http messages (MSG1) related to said http streaming request (REQ1) comprising said second files (C2.F1 ; C2.F2), said second media content (C2) being segmented within some of said second files (C2.F2).

2. A method according to claim 1, wherein the media content (C) is an audio/video channel.

3. A method according to claim 1 or claim 2, wherein it comprises a further step of checking authentication and authorization of the mobile apparatus (MA) to have access to a media content (C1, C2).

4. A method according to any one of the previous claims, wherein it comprises a further step of saving context information (I) on an http streaming request of a mobile apparatus (MA) regarding a media content (C).

5. A method according to any one of the previous claims, wherein it comprises a further step of sending to an event management system (EMS) an event (E) for notifying the end of the playing of the first media content (C1) and the beginning of the playing of the second media content (C2).

6. A method according to any one of the previous claims, wherein it comprises a further step of inserting an advertisement content within said second files (C2.F1; C2.F2).

7. A method of requesting a switching media content (C) for a mobile apparatus (MA) comprising a media content player (PL) and a media content selector (SE), wherein it comprises the steps of :
- sending to said http server (HTTP_S) by means of said media content player (PL) an http streaming request (REQ1) for playing a first media content (C1) on said media content player (PL) ;
- receiving from said http server (HTTP_S) on said media content player (PL) first http messages (MSG1) related to said http streaming request (REQ1) comprising first files (C1.F1 ; C1.F2) corresponding to said first media content (C1), said first media content (C1) being segmented within some of said first files ;
- sending to said http server (HTTP_S) by means of said media content selector (SE) an http switching media content request (REQ2) for playing a second media content (C2) on said media content player (PL) ; and
- receiving from said http server (HTTP_S) on said media content player (PL) first http messages (MSG1) related to said http streaming request (REQ1) comprising second files (C2.F1 ; C2.F2), said second media content (C2) being segmented within some of said second files (C2.F2).

8. An http server (HTTP_S) able to switch media content (C) and able to communicate with a mobile apparatus (MA) comprising a media content player (PL) and a media content selector (SE), wherein it is able to :
- receive an http streaming request (REQ1) from said media content player (PL) for playing a first media content (C1) on said media content player (PL) ;
- send to said media content player (PL) first http messages (MSG1) related to said http streaming request (REQ1) comprising first files (C1.F1 ; C1.F2) corresponding to said first media content (C1), said first media content (C1) being segmented within some of said first files ;
- receive an http switching media content request (REQ2) from said media content selector (SE) for playing a second media content (C2) on said media content player (PL) ;
- replace within said first http messages (MSG1) said first files (C1.F1 ; C1.F2) by second files (C2.F1 ; C2.F2) corresponding to said second media content (C2) ; and
- send to said media content player (PL) first http messages (MSG1) related to said http streaming request (REQ1) comprising said second files (C2.F1 ; C2.F2), said second media content (C2) being segmented within some of said second files (C2.F2).

9. A mobile apparatus (MA) comprising a media content player (PL) and a media content selector (SE) and able to communicate with an http server (HTTP_S), wherein it is able to :
- send to said http server (HTTP_S) by means of said media content player (PL) an http streaming request (REQ1) for playing a first media content (C1) on said media content player (PL) ;
- receive from said http server (HTTP_S) on said media content player (PL) first http messages (MSG1) related to said http streaming request (REQ1) comprising first files (C1.F1 ; C1.F2) corresponding to said first media content (C1), said first media content (C1) being segmented within some of said first files ;
- send to said http server (HTTP_S) by means of said media content selector (SE) an http switching media content request (REQ2) for playing a second media content (C2) on said media content player (PL) ; and
- receive from said http server (HTTP_S) on said media content player (PL) first http messages (MSG1) related to said http streaming request (REQ1) comprising second files (C2.F1 ; C2.F2), said second media content (C2) being segmented within some of said second files (C2.F2).

10. A mobile apparatus (MA) according to claim 9, wherein it is a mobile phone.

11. A mobile apparatus (MA) according to claim 9 or claim 10, wherein it is an IPhone^{™}.

12. A media communication system (SYS), wherein it comprises an http server (HTTP_S) according to claim 8 and a mobile apparatus (MA) according to any one of claims 9 to 11.

13. A computer program product for a computer, comprising a set of instructions, which when loaded into said computer, causes the computer to carry out the method as claimed in any one of claims 1 to 6.

## Amended claims

### Amended claims in accordance with Rule 137(2) EPC.

**1.** A method of switching media content (C) for a mobile apparatus (MA) comprising a media content player (PL) and a media content selector (SE), wherein it comprises the steps of :
- receiving by an http server (HTTP_S) an http streaming request (REQ1) from said media content player (PL) for playing a first media content (C1) on said media content player (PL) ;
- sending from said http server (HTTP_S) to said media content player (PL) first http messages (MSG1) related to said http streaming request (REQ1) comprising first files (C1.F1 ; C1.F2) corresponding to said first media content (C1), said first media content (C1) being segmented within some of said first files ;
- receiving by said http server (HTTP_S)_an http switching media content request (REQ2) from said media content selector (SE) for playing a second media content (C2) on said media content player (PL) ;
- replacing by said http server (HTTP_S)_within said first http messages (MSG1) said first files (C1.F1 ; C1.F2) by second files (C2.F1 ; C2.F2) corresponding to said second media content (C2) ; and
- sending from said http server (HTTP_S) to said media content player (PL) first http messages (MSG1) related to said http streaming request (REQ1) comprising said second files (C2.F1 ; C2.F2), said second media content (C2) being segmented within some of said second files (C2.F2).

**2.** A method according to claim 1, wherein the media content (C) is an audio/video channel.

**3.** A method according to claim 1 or claim 2, wherein it comprises a further step of checking authentication and authorization of the mobile apparatus (MA) to have access to a media content (C1, C2).

**4.** A method according to any one of the previous claims, wherein it comprises a further step of saving context information (I) on an http streaming request of a mobile apparatus (MA) regarding a media content (C).

**5.** A method according to any one of the previous claims, wherein it comprises a further step of sending to an event management system (EMS) an event (E) for notifying the end of the playing of the first media content (C1) and the beginning of the playing of the second media content (C2).

**6.** A method according to any one of the previous claims, wherein the second files (C2.F1; C2.F2) comprise an advertisement content.

**7.** A method of requesting a switching media content (C) for a mobile apparatus (MA) comprising a media content player (PL) and a media content selector (SE), wherein it comprises the steps of :
- sending to an http server (HTTP_S) by means of said media content player (PL) an http streaming request (REQ1) for playing a first media content (C1) on said media content player (PL) ;
- receiving from said http server (HTTP_S) on said media content player (PL) first http messages (MSG1) related to said http streaming request (REQ1) comprising first files (C1.F1 ; C1.F2) corresponding to said first media content (C1), said first media content (C1) being segmented within some of said first files ;
- sending to said http server (HTTP_S) by means of said media content selector (SE) an http switching media content request (REQ2) for playing a second media content (C2) on said media content player (PL) ; and
- receiving from said http server (HTTP_S) on said media content player (PL) first http messages (MSG1) related to said http streaming request (REQ1) comprising second files (C2.F1 ; C2.F2), said second media content (C2) being segmented within some of said second files (C2.F2).

**8.** An http server (HTTP_S) able to switch media content (C) and able to communicate with a mobile apparatus (MA) comprising a media content player (PL) and a media content selector (SE), wherein it is able to :
- receive an http streaming request (REQ1) from said media content player (PL) for playing a first media content (C1) on said media content player (PL) ;
- send to said media content player (PL) first http messages (MSG1) related to said http streaming request (REQ1) comprising first files (C1.F1 ; C1.F2) corresponding to said first media content (C1), said first media content (C1) being segmented within some of said first files ;
- receive an http switching media content request (REQ2) from said media content selector (SE) for playing a second media content (C2) on said media content player (PL) ;
- replace within said first http messages (MSG1) said first files (C1.F1 ; C1.F2) by second files (C2.F1 ; C2.F2) corresponding to said second media content (C2) ; and
- send to said media content player (PL) first http messages (MSG1) related to said http streaming request (REQ1) comprising said second files (C2.F1 ; C2.F2), said second media content (C2) being segmented within some of said second files (C2.F2).

**9.** A mobile apparatus (MA) comprising a media content player (PL) and a media content selector (SE) and able to communicate with an http server (HTTP_S), wherein it is able to :
- send to said http server (HTTP_S) by means of said media content player (PL) an http streaming request (REQ1) for playing a first media content (C1) on said media content player (PL) ;
- receive from said http server (HTTP_S) on said media content player (PL) first http messages (MSG1) related to said http streaming request (REQ1) comprising first files (C1.F1 ; C1.F2) corresponding to said first media content (C1), said first media content (C1) being segmented within some of said first files ;
- send to said http server (HTTP_S) by means of said media content selector (SE) an http switching media content request (REQ2) for playing a second media content (C2) on said media content player (PL) ; and
- receive from said http server (HTTP_S) on said media content player (PL) first http messages (MSG1) related to said http streaming request (REQ1) comprising second files (C2.F1 ; C2.F2), said second media content (C2) being segmented within some of said second files (C2.F2).

**10.** A mobile apparatus (MA) according to claim 9, wherein it is a mobile phone.

**11.** A mobile apparatus (MA) according to claim 9 or claim 10, wherein it is an IPhone^{™}.

**12.** A media communication system (SYS), wherein it comprises an http server (HTTP_S) according to claim 8 and a mobile apparatus (MA) according to any one of claims 9 to 11.

**13.** A computer program product for a computer, comprising a set of instructions, which when loaded into said computer, causes the computer to carry out the method as claimed in any one of claims 1 to 6.
